# EUROPEAN PATENT APPLICATION

(11) **EP 1 215 594 A1**
(43) Date of publication of application: **19.06.2002**
(21) Application number: 01129887.4
(22) Date of filing: 14.12.2001
(51) Int. Cl.: G06F 17/30

(54) **Method, device and mobile tool for creating an electronic album**

(30) Priority: 18.12.2000 JP 2000384242
(71) Applicant: YAMAHA HATSUDOKI KABUSHIKI KAISHA, Iwata-shi Shizuoka-ken (JP)
(72) Inventor: Yokota, Takashi, c/o Yamaha Hatsudoki K. K., Iwata-shi, Shizuoka-ken (JP)
(74) Representative: Grünecker, Kinkeldey, Stockmair & Schwanhäusser Anwaltssozietät

(57) **Abstract**

Method and device for creating an electronic album with means for receiving data of at least one picture, means for receiving data of time when the picture is taken, means for receiving position data, means for receiving data of time when the position data is acquired, and means for associating said received data with each other for creating said electronic album, and a mobile tool having means for associating with each other: data of pictures, data of time when the pictures are taken, position data acquired at a mobile terminal, and data of time at which the position data is acquired, and means for transmitting the associated data to a server that is connected to Internet and provided with an electronic album creating means for creating an electronic album.

## Description

This invention relates to a method for creating an electronic album, a device for creating an electronic album and a mobile tool for creating an electronic album. In particular for electronic albums that handles digital pictures as a database automatically within a server, and in particular relates to a method of creating electronic albums of trips by editing picture data taken with digital cameras during trips.

A type of program software for electronic albums has been developed that handles digital pictures within a database. According to the electronic album software, it is possible for example to edit picture data taken with digital cameras during trips with indexes and comments affixed to the data of every picture to create albums.

However, with the conventional albums, the picture data are merely handled by every index and not fully utilized as electronic data. For example, it would be convenient if an electronic album could be made in real time during a trip so that the album could be seen by other persons in other places to learn the situation of the trip and share the pleasure of the trip. It would be further convenient if a common electronic album could be created automatically from the data of pictures taken with plural cameras of a group of people making a trip.

It is an objective of the present invention to provide a method for creating an electronic album, a device for creating an electronic album and a mobile tool for creating an electronic album allowing enhanced functions.

According to the method aspect of the present invention, said objective is solved by a method for creating an electronic album with the steps of: receiving data of at least one picture, receiving data of time when the picture is taken, receiving position data, receiving data of time when the position data is acquired, and associating said received data with each other for creating said electronic album.

Preferably, said method for creating an electronic album further comprises the step of: receiving comment information and associating the comment information with the picture data.

Preferably, said method for creating an electronic album further comprises the step of: editing the comment information.

Preferably, said data of the picture is taken with at least one digital camera and/or the position data is acquired at a mobile terminal.

Preferably, said method for creating an electronic album further comprises the step of: receiving an identification signal, especially a user's name and/or a password, and associating the received data with each other for creating electronic album in accordance with the identification signal.

According to a preferred embodiment, there is provided a server connected to Internet for editing digital graphic data, wherein the data, especially the data of at least one picture and/or the data of time when the picture is taken and/or the position data and/or the data of time when the position data is acquired and/or comment information inputted through a mobile terminal, is received by said server through Internet and the electronic album is made by using program software provided in the server associating the received data with each other.

According to a preferred embodiment, there is provided a user's computer connected to Internet and provided for editing the comment information.

Preferably, said method for creating an electronic album further comprises the step of: taking a plural of pictures from plural digital cameras and receiving said pictures by a common server, especially through Internet, wherein the received data is associating with each other for creating a common electronic album, especially after receiving a user's name and/or a password that can be accessed from plural digital cameras to create a common electronic album using the data coming from the plural digital cameras after recognizing the user by the user's name and/or the password.

Accordingly, there is provided a method of creating electronic albums, with enhanced functions, of trips by making it possible during a trip to edit digital picture data taken during the trip and create electronic albums that can be easily displayed.

According to a first apparatus aspect of the present invention, said objective is solved by a device for creating an electronic album, especially for carrying out the method as mentioned above, comprising a data storage means for receiving data of at least one picture, especially taken with a digital camera, data of time when the picture is taken, position data and data of time when the position data are acquired, and a data processing means for associating the received data with each other for creating said electronic album.

According to a preferred embodiment, said device for creating an electronic album comprises a server connected to Internet, a program storage means for storing program software for creating electronic albums by editing digital picture data, and an electronic album editing means for editing the electronic album according to the program software stored in the program storage means on the basis of the of the data associated with each other by the data processing means.

According to a second apparatus aspect of the present invention, said objective is solved by a mobile tool for creating an electronic album, especially for carrying out the method as mentioned above, wherein the mobile tool comprises means for associating with each other: data of pictures, especially taken with digital cameras, data of time when the pictures are taken, position data acquired at a mobile terminal, and data of time at which the position data is acquired, and means for transmitting the associated data to a server that is connected to Internet and provided with an electronic album creating means.

Preferred embodiments of the present invention are laid down in further dependent claims.

In the following, the present invention is explained in greater detail with respect to several embodiments thereof in conjunction with the accompanying drawings, wherein:
- FIG. 1: generally shows an entire system of the method of creating electronic albums of trips according to an embodiment;
- FIG. 2: shows the constitution of an electronic album creating device provided in the server shown in FIG. 1; and
- FIG. 3: shows flowcharts of actions on the server's side and user's side in creating electronic albums of trips according to an embodiment.

A method of creating electronic albums of trips according to an embodiment will be hereinafter described in reference to appended drawings.

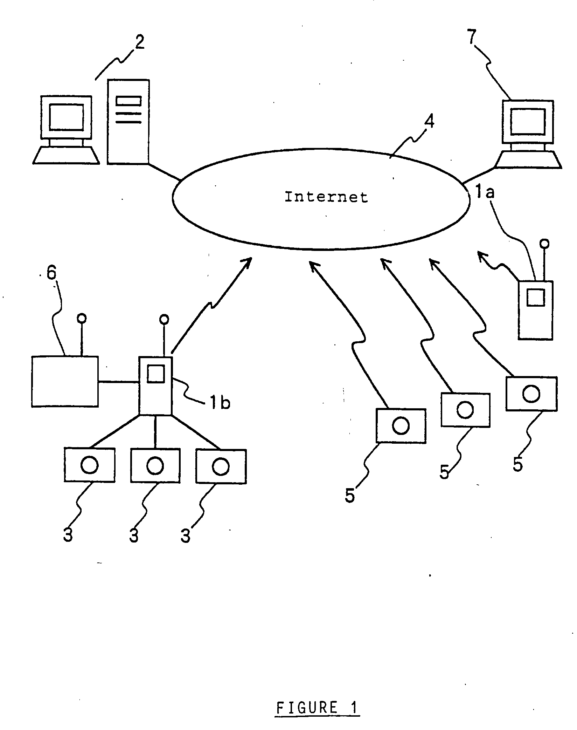

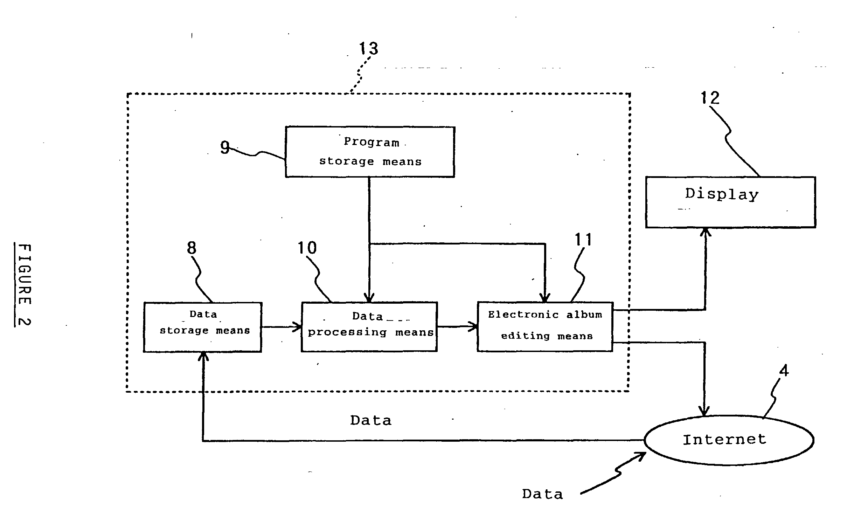

FIG. 1 generally shows a constitution of the entire system for creating electronic albums of trips according to an embodiment. FIG. 2 shows a constitution of an electronic album creating device in the server of the system.

A standalone mobile terminal 1a, a mobile terminal 1b connected to plural digital cameras 3 and to a GPS receiver 6, and plural digital cameras 5 having communicating function and carried by users, are connected through the Internet 4 to a server 2. A user's computer (personal computer) 7 for the user to enter data is also connected to the server 2 through the Internet 4. The server 2 has functions of keeping picture data files, inputting and outputting data, controlling accesses, and creating electronic albums as shown in FIG. 2.

As shown in FIG. 2, an electronic album creating device 13 is formed in the server 2. The electronic album creating device 13 is made up of a data storage means 8, a program storage means 9, a data processing means 10, and an electronic album editing means 11. The electronic album editing means 11 is connected to a display 12 in the server 2.

The data storage means 8 temporarily stores data, for creating electronic albums, sent from the user's side through the Internet 4. The pieces of data sent from the user's side are; picture data taken with digital cameras, data of the times when those picture data are taken, position data acquired at the mobile terminal, time data at which the position data are acquired, and data of user's comments.

The picture data of the digital cameras 3 having no communicating function (FIG. 1) are transmitted through the mobile terminal 1b over the Internet. The picture data of the digital cameras 5 having communicating function (FIG. 1) are transmitted directly through the Internet. Each piece of picture data is transmitted together with the time data at which it is taken.

Position data are acquired from a GPS receiver 6 provided at the mobile terminal 1b and sent to the server 2. It is also possible for the user, without using the GPS position data, to manually specify position coordinates on an electronic map and enter them through the mobile terminal 1a or 1b, and transmit them. Together with the position data is transmitted its time data. This is used to identify positions of the picture data by comparing with the times of the picture data.

The comment data are those which the user wants to record on the album; user's feelings, surrounding situations, or sightseeing information, related to respective pictures, and entered by the user through the mobile terminal 1a or 1b.

The program storage means 9 stores a program software that automatically classifies and edits the received data and creates electronic albums on the basis of those data.

The data processing means 10 classifies the data, sent from the user and stored in the storing means 8, according to whether each piece of data is picture data, position data, etc by the program.

The electronic album editing means 11 creates electronic albums according to the program by editing the classified data; combining the pictures with dates, titles, comments, etc. Here, for different picture data from plural digital cameras, places are identified by comparing with time data, and pictures of the same place are edited in the same album under the same title.

The edited electronic album may be displayed on the display 12 in the server. It is also possible to display, not on the display 12 but on the mobile terminal 1a, 1b, or third party's terminal screen such as the user's computer 7 through the Internet.

It is also possible to send the various data for creating the electronic album from the user's computer 7 through the Internet 4 to the server 2. This makes it possible for example to create an electronic album using picture data from digital cameras in real time during a trip, to enter further new picture data and comment data from the user's computer 7 after the trip, or to re-edit the electronic album by deleting picture data from the created electronic album. In that way, an electronic album may be created that suites one's own preference.

It is also possible to store picture data or comment data acquired from the digital cameras 3 and 5 in succession into the mobile terminals 1a, 1b, or in the digital cameras 5 and to cause the mobile terminals 1a, 1b, and/or digital cameras 5 to gain access to the server 2 automatically at constant intervals to cause it to transmit picture data and position data. In that way, the electronic albums may be edited automatically during the trip.

Since the server 2 is connected to the Internet 4, electronic albums created with the server 2 may be disclosed outside; for example third party such as family members, friends, etc. may gain access to the server 2 over the Internet to see the electronic albums. Thus, the friends, etc. who are not joining the trip can learn the circumstances of the trip from different places in almost real time to share the pleasure of the trip.

When a group of users make a trip with each user carrying a digital camera, it is possible to create in real time an album that is common to the group by entering a password and a users' name registered in the electronic album software and by transmitting picture data. In that case, since positions and places of the picture data sent from different digital cameras may be identified by comparing with the time data sent together with the picture data, the common electronic album may be edited.

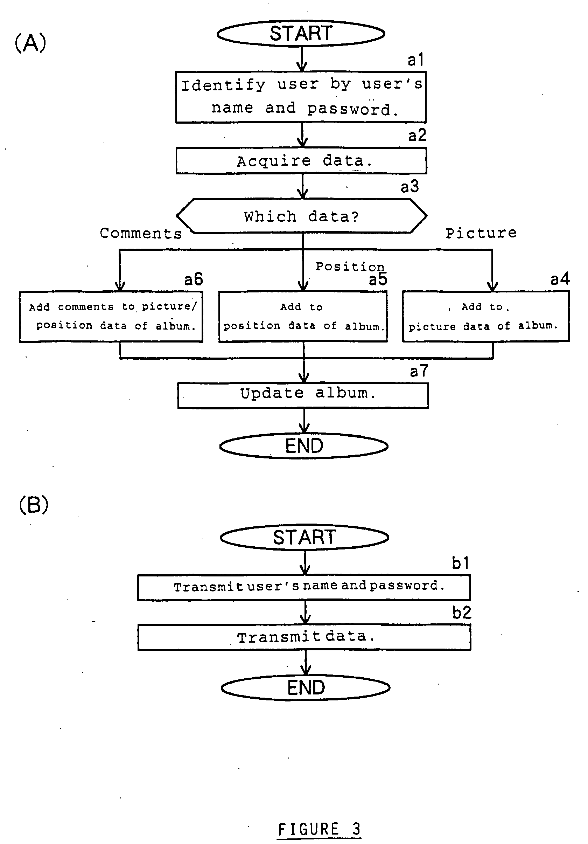

FIG. 3 is a flowchart of actions on the server's side and the user's side when creating electronic albums of trips according to an embodiment.

FIG. 3(A) shows the actions on the server's side. The server, when accessed by a user, identifies the user by checking the user's name and the password (step a1). When the user is recognized to be authentic as a result of checking the user's name and the password, data are taken from the digital cameras and mobile terminals being accessed (step a2). Those data are entered and stored in the data storage means 8 of the electronic album creating device 13 (FIG. 2) in the server. Those data are identified for their types with a data processing means 10 (FIG.2) (step a3). In case the received data are those of pictures, they are added to the area for storing picture data of the electronic album (step a4). In case they are position data, they are added to the area for storing position data (step a5). In case they are character data such as comments, they are added to the area for storing picture data or position data (step a6).

On the basis of the above data, picture data are classified according to program by place and time, affixed with comments and indexes, and automatically edited into an album (step a7). In that way the album of the trip is updated in real time on the server with the data sent in succession during the trip.

When the album is to be updated automatically, a program may be installed that gains access from the server's side to the mobile terminals and digital cameras of the registered users at constant time intervals to acquire data, or a program that, as described above, sends position data and picture data of the digital cameras automatically to the users' mobile terminals at constant time intervals.

FIG. 3(B) shows the actions on the user's side. The user sends the user's name and password to the server (step b1), and sends data required for creating the electronic album such as picture data and character data (step b2). If the user's name and password are correct here, each person of the group, as described above, sends data, so that a common album may be created.

Through the above process, the server stores the data of current position and pictured data based on the user's data in the form of an electronic album together with comments. Since the electronic album created as described above may be accessed from outside over the Internet, friends or the like persons who know the password can learn in real time how the friends are and how the trip is going on, and get up-to-date the local information in that area.

According to the embodiments as described above, picture data taken with digital cameras carried by travelers during trips are sent, immediately automatically or at constant time intervals together with data of times at which the pictures are taken, to the server. Together with the above data, time data on the trip route, position data of that time, and comment data, etc. are sent from the mobile terminal to the server. The server's side receives those data, and on the basis of those data compares the picture data with the position data by time, affixes comments, and automatically edits in real time the data into electronic albums for specific places. In that case, since the electronic albums are created in the server connected to the Internet, they may be accessed from outside by a matching password, so that the circumstances of the trip and the surroundings may be learned by seeing electronic albums created from time to time during the trip.

Regarding the embodiments described above it is provided a method for creating electronic albums of trips using program software provided in a server connected to the Internet for editing digital picture data to create electronic albums. Said server being made capable of receiving; data of pictures taken with digital cameras, data of the times when the pictures are taken, position data acquired at a mobile terminal, and data of the times when the position data are acquired. Said albums being made by associating the received pieces of information with each other.

With the above constitution, the server connected to the Internet has an electronic album creating program, so that picture data taken with digital cameras travelers carry during a trip are sent, automatically immediately or at constant time intervals together with data of the times when the pictures are taken, to a server, or a user enters and sends such data manually to the server. Together with the above data, time data on the trip route and the position data for the time data, comment data, etc. are sent from a separate mobile terminal to the server automatically or manually. The server receives such data, checks correspondence between the picture data and the position data according to the time, associates such data with each other, and edits them according to program software to create albums, each corresponding to a specific place.

In that case, since the electronic albums are created in the server connected to the Internet, the albums may be accessed from outside by matching a password to learn the situation of the trip and the surroundings by seeing electronic albums created in succession. Incidentally, data of not only still pictures but also animated pictures may be sent and edited into albums.

In a preferable example constitution, the server is being made capable of receiving comment information entered through the mobile terminal and capable of creating electronic albums by associating the comment information with the picture data.

With the above constitution, comments on the picture data are entered at the user's mobile terminal and sent to the server. The server, upon receiving the comments, associates the received comment information with already stored picture data to edit an electronic album. This makes it possible not only to create electronic albums with comments attached to picture data in real time during a trip but also to add comments and other information after the trip, or to delete picture data, or to rewrite comments, so that any electronic albums may be edited that suit one's preference. Incidentally, the comment data may be entered in voice as well as in letters.

Another preferable example constitution is being made capable of editing the comment information using a user's computer connected to the Internet.

The above constitution provides improvement in convenience; it is possible for the user him/herself using a user's computer (a computer on the user's side) to associate the comment information with the picture data, etc. before they are sent to the server to edit them to some extent, and send the partially edited data from the user's computer or a mobile terminal to the server. Thus, it is possible to edit electronic albums using personal computers, etc. other than the mobile terminal.

According to still another example constitution the server is made capable of receiving a user's name and a password that are accessible from plural digital cameras to recognize the user from the user's name and the password and edit a common electronic album based on the data coming from the plural digital cameras.

With this constitution, it is possible for example to create a common electronic album through the following steps when a group of people make a trip: Picture data of digital cameras carried by respective persons are sent to a server through the same user's name and password. The server receives and recognizes that the user is authentic, compares picture data acquired from different digital cameras on the basis of time data, combines them with position data and comments, and automatically creates a common electronic album. In this way, the pleasure of the trip is shared and enhanced.

According to the embodiments described above, there is further provided a device for creating electronic albums of trips, wherein a server is connected to the Internet; a program storage means having stored program software for creating electronic albums by editing digital picture data, a data storage means for receiving and storing data of pictures taken with a digital camera, data of the times when the pictures are taken, position data acquired at a mobile terminal, and data of the times when the position data are acquired, a data processing means for associating the received pieces of information with each other, and an electronic album editing means for editing electronic albums according to the program software stored in the program storage means on the basis of the pieces of data associated with each other using the data processing means.

With the above constitution, the device for implementing the method described above is formed in the server, the electronic album creating program is pre stored in the program storage means, various data, for creating the electronic album, sent from the user's side are temporarily stored in the data storage means, the above data are associated with each other by means of the data processing means, and the electronic album is edited with the electronic album editing means according to the above program and according to the association. Transmission of data is performed over the Internet connected to the server, and the created electronic album may be accessed by a third party over the Internet.

Furthermore, there is provided a mobile tool for creating electronic albums, wherein the mobile tool associates with each other data of pictures taken with digital cameras, data of the times when the pictures are taken, position data acquired at a mobile terminal, and data of the times when the position data are acquired and sends the associated data to a server that is connected to the Internet and provided with an electronic album creating device.

With the mobile tool of the above constitution, various data for creating electronic albums are associated with each other at the mobile terminal owned by the user, sent to the server provided with electronic album creating program, and the electronic albums are created in the server. The user on the mobile terminal side makes the data association according to the situation at that time or to the user's intention, and makes albums of his preference. Incidentally, the data association and the data editing are also made in the server.

According to the method aspect, there is provided a method for creating an electronic album with the steps of: receiving data of at least one picture, receiving data of time when the picture is taken, receiving position data, receiving data of time when the position data is acquired, and associating said received data with each other for creating said electronic album.

Preferably, said method for creating an electronic album further comprises the step of: receiving comment information and associating the comment information with the picture data. It is further preferable that said method for creating an electronic album further comprises the step of: editing the comment information.

Preferably, said data of the picture is taken with at least one digital camera 3, 5. The position data is acquired at a mobile terminal 1a, 1b.

It is further preferred to receive an identification signal, especially a user's name and/or a password, and associating the received data with each other for creating electronic album in accordance with the identification signal.

According to a preferred embodiment, there is provided a server connected to Internet for editing digital graphic data, wherein the data is received by said server 2 through Internet 4 and the electronic album is made by using program software provided in the server 2 associating the received data with each other. According to the embodiment said data is the data of at least one picture and/or the data of time when the picture is taken and/or the position data and/or the data of time when the position data is acquired and/or comment information inputted through a mobile terminal 1a, 1b.

According to a preferred embodiment, there is provided a user's computer 7 connected to Internet 4 and provided for editing the comment information.

Preferably, said method for creating an electronic album further comprises the step of: taking a plural of pictures from plural digital cameras 3,5 and receiving said pictures by a common server 2. Said data is received through Internet 4. The received data is associating with each other for creating a common electronic album. According to the embodiment said data is associated after receiving a user's name and/or a password that can be accessed from plural digital cameras to create a common electronic album using the data coming from the plural digital cameras after recognizing the user by the user's name and/or the password.

Accordingly, there is provided a method of creating electronic albums, with enhanced functions, of trips by making it possible during a trip to edit digital picture data taken during the trip and create electronic albums that can be easily displayed.

According to a first apparatus aspect, there is provided a device for creating an electronic album, especially for carrying out the method as mentioned above, comprising a data storage means 8 for receiving data of at least one picture. Said data is taken with a digital camera. Said data storage means 8 is further provided for receiving data of time when the picture is taken, position data and data of time when the position data are acquired. Furthermore a data processing means 10 is provided for associating the received data with each other for creating said electronic album.

According to a preferred embodiment said device for creating an electronic album comprises a server 2 connected to Internet 4, a program storage means 9 for storing program software for creating electronic albums by editing digital picture data, and an electronic album editing means 11 for editing the electronic album according to the program software stored in the program storage means 11 on the basis of the of the data associated with each other by the data processing means 10.

According to a second apparatus aspect, there is provided a mobile tool for creating an electronic album, especially for carrying out the method as mentioned above, wherein the mobile tool comprises means for associating with each other: data of pictures. Said picture data is taken with digital cameras 3,5. Said means are further provided for associating data of time when the pictures are taken, position data acquired at a mobile terminal 1a, 1b, and data of time at which the position data is acquired. Moreover means are provided for transmitting the associated data to a server 2 that is connected to Internet 4 and provided with an electronic album creating means.

## Claims

1. Method for creating an electronic album with the steps of:
receiving data of at least one picture, receiving data of time when the picture is taken, receiving position data, receiving data of time when the position data is acquired, and associating said received data with each other for creating said electronic album.

2. Method for creating an electronic album according to claim 1, **characterized by** receiving comment information and associating the comment information with the picture data.

3. Method for creating an electronic album according to claim 2, **characterized by** editing the comment information.

4. Method for creating an electronic album according to at least one of the claims 1 to 3, **characterized in that** said data of the picture is taken with at least one digital camera (3,5) and/or the position data is acquired at a mobile terminal (1a, 1b).

5. Method for creating an electronic album according to at least one. of the claims 1 to 4, **characterized by** receiving an identification signal, especially a user's name and/or a password, and associating the received data with each other for creating electronic album in accordance with the identification signal.

6. Method for creating an electronic album according to at least one of the claims 1 to 5, **characterized by** a server (2) connected to Internet (4) for editing digital graphic data, wherein the data, especially the data of at least one picture and/or the data of time when the picture is taken and/or the position data and/or the data of time when the position data is acquired and/or comment information inputted through a mobile terminal (1a,1b), is received by said server (2) through Internet (4) and the electronic album is made by using program software provided in the server (2) associating the received data with each other.

7. Method for creating an electronic album according to claim 6, **characterized by** a user's computer (7) connected to Internet (4) and provided for editing the comment information.

8. Method for creating electronic album according to claim 6 or 7, **characterized by** taking a plural of pictures from plural digital cameras (3,5) and receiving said pictures by a common server (2), especially through Internet (4), wherein the received data is associating with each other for creating a common electronic album, especially after receiving a user's name and/or a password that can be accessed from plural digital cameras to create a common electronic album using the data coming from the plural digital cameras after recognizing the user by the user's name and/or the password.

9. Device for creating an electronic album, especially for carrying out the method according to at least one of the claims 1 to 8, comprising a data storage means (8) for receiving data of at least one picture, especially taken with a digital camera, data of time when the picture is taken, position data and data of time when the position data are acquired, and a data processing means (10) for associating the received data with each other for creating said electronic album.

10. Device for creating an electronic album according to claim 9 **characterized by** a server (2) connected to Internet (4), a program storage means (9) for storing program software for creating electronic albums by editing digital picture data, and an electronic album editing means (11) for editing the electronic album according to the program software stored in the program storage means (11) on the basis of the of the data associated with each other by the data processing means (10).

11. Mobile tool for creating an electronic album, especially for carrying out the method according to at least one of the claims 1 to 8, wherein the mobile tool comprises means for associating with each other: data of pictures, especially taken with digital cameras (3,5), data of time when the pictures are taken, position data acquired at a mobile terminal (1a, 1b), and data of time at which the position data is acquired, and means for transmitting the associated data to a server (2) that is connected to Internet (4) and provided with an electronic album creating means.
